(19) Europäisches Patentamt
European Patent Office
Office européen des brevets

(11) Veröffentlichungsnummer: **0 226 142**
**B1**

(12) **EUROPÄISCHE PATENTSCHRIFT**

(45) Veröffentlichungstag der Patentschrift: **14.11.90**

(51) Int. Cl.$^5$: **C 08 G 63/18**, C 08 L 67/02

(21) Anmeldenummer: **86116928.2**

(22) Anmeldetag: **05.12.86**

(54) **Neue aromatische Polyester, Verfahren zu deren Herstellung sowie deren Verwendung zur Herstellung von molekular verstärkten Polymeren.**

(30) Priorität: **18.12.85 DE 3544694**

(43) Veröffentlichungstag der Anmeldung:
**24.06.87 Patentblatt 87/26**

(45) Bekanntmachung des Hinweises auf die Patenterteilung:
**14.11.90 Patentblatt 90/46**

(84) Benannte Vertragsstaaten:
**DE FR GB IT**

(56) Entgegenhaltungen:
**EP-A-0 030 182**
**US-A-3 374 202**
**US-A-4 153 779**

**DIE ANGEWANDTE MAKROMOLEKULARE CHEMIE, Band 131, April 1985, Seiten 95-105, Hüthig & Wepf Verlag, Basel, CH; H.-R. DICKE et al.: "Liquid crystal polymers"**

**Die Akte enthält technische Angaben, die nach dem Eingang der Anmeldung eingereicht wurden und die nicht in dieser Patentschrift enthalten sind.**

(73) Patentinhaber: **BAYER AG**
**D-5090 Leverkusen 1 Bayerwerk (DE)**

(72) Erfinder: **Heitz, Walter, Prof.Dr.**
**Am Schmidtforn 5**
**D-3575 Kirchhain (DE)**
Erfinder: **Kampschulte, Uwe**
**Schulweg 12**
**D-4223 Voerde 2 (DE)**
Erfinder: **Bottenbruch, Ludwig, Dr.**
**Wöhlerstrasse 5**
**D-4150 Krefeld (DE)**
Erfinder: **Freitag, Dieter, Dr.**
**Hasenheide 10**
**D-4150 Krefeld (DE)**
Erfinder: **Dicke, Hans-Rudolf, Dr.**
**Bodelschwinghstrasse 16**
**D-4150 Krefeld (DE)**

**EP 0 226 142 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft neue aromatische Polyester auf Basis von Terephthalsäure und Hydrochinonen, Verfahren zu deren Herstellung aus Hydrochinonderivaten und Terephthalsäure sowie deren Verwendung zur Herstellung von molekular verstärkten Polymeren.

Bekanntlich sind verschiedene Polymere im allgemeinen nur begrenzt oder überhaupt nicht miteinander molekular mischbar. So können z.B. bei erhöhter Temperatur hergestellte Mischungen zweier verschiedener Polymerer beim Abkühlen sich in Domänen separieren. Dies gilt besonders für Mischungen flüßig-kristalliner Polymerer in anderen Polymeren.

Es wurde nun gefunden, daß spezielle substituierte Polyester aus Hydrochinonen und Terephthalsäure mit vielen anderen Polymeren mischbar und verträglich sind und über einen weiten Temperaturbereich von −30 bis 250°C homogene Lösungen und Mischungen miteinander bilden.

Gegenstand der Erfindung sind daher neue Polyester der Formel (I)

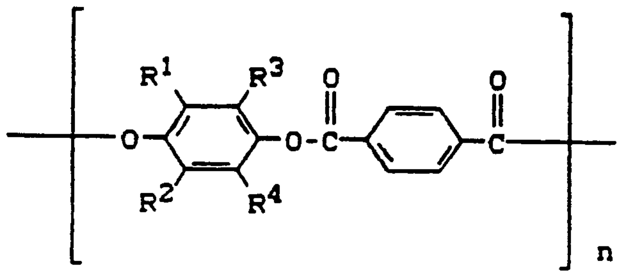 (I),

in welcher

die Reste $R^1$ bis $R^4$ unabhängig voneinander Wasserstoff, einen Arylalkyl-, Arylalkylether-, Arylalkylthioetherrest, mit einem unverzweigten, 2,3,4,5,6,7,8,9 oder 10-Atome enthaltenden Alkylteil, an dessen ω-C-Atom am Ende der Kette ein unsubstituierter 6 bis 24 C-Atome enthaltender Arylteil steht, bedeuten und

n für eine ganze Zahl von 5 bis 2000 steht,

mit der Maßgabe, daß immer einer der Reste $R^1$ bis $R^4$ verschieden von Wasserstoff sein muß.

Als Reste $R^1$ bis $R^4$ sind vorzugsweise genannt Wasserstoff und Reste der Formeln (II) bis (VII)

H, 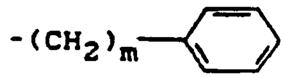 , 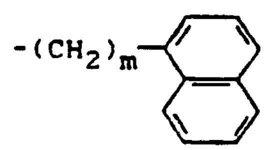 ,

(II) (III)

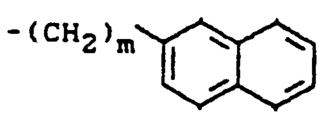 , 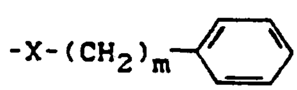 ,

(IV) (V)

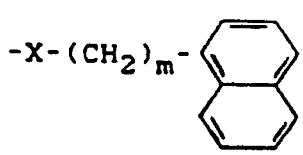 , 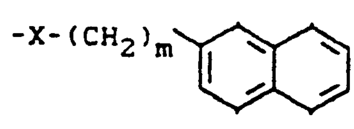

(VI) (VII)

in welchen

m für die Zahl 2,3,4,5,6,7,8,9 oder 10 steht, besonders bevorzugt für die Zahl 2 oder 3 steht und

X für Sauerstoff (O) oder Schwefel (S) steht.

Besonders bevorzugt sind Reste der Formeln (II), (III), (IV) und (V), insbesondere werden Reste der Formel (II) verwendet.

Die neuen Polyester haben Molekulargewichte $M_n$ von 2500 bis $10^6$, vorzugsweise von 5000 bis 500.000.

Ein weiterer Gegenstand der Erfindung ist ein Verfahren zur Herstellung der Polyester der Formel (I)

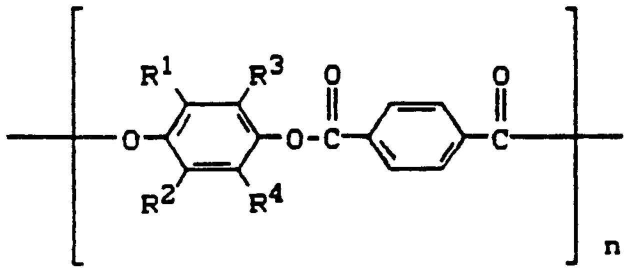

(I),

in welcher

die Reste $R^1$ bis $R^4$ unabhängig voneinander Wasserstoff, einen Arylalkyl-, Arylalkylether-, Arylalkylthioetherrest, mit einem unverzweigten, 2,3,4,5,6,7,8,9 oder 10 C-Atome enthaltenden Alkylteil, an dessen ω-C-Atom am Ende der Kette ein unsubstituierter 6 bis 24 C-Atome enthaltender Arylteil steht, bedeuten und

n für eine ganze Zahl von 5 bis 2000 steht,

mit der Maßgabe, daß immer einer der Reste $R^1$ bis $R^4$ verschieden von Wasserstoff sein muß, dadurch gekennzeichnet, daß.

Hydrochinone der Formel (VIII)

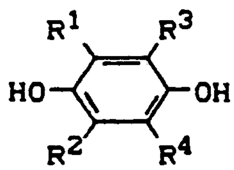

(VIII),

in welcher

die Reste $R^1$ bis $R^3$ die bei Formel (I) angegebene Bedeutung haben,

a) mit Terephthalsäurederivaten wie den Halogeniden der Formel (IX)

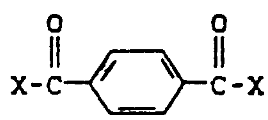

(IX),

in welcher

X für Halogen wie Cl, Br steht, gegebenenfalls in üblichen organischen Lösungsmitteln bei Temperaturen von 0 bis 250°C, vorzugsweise 20 bis 150°C in Gegenwart von mindestens äquivalenten Mengen eines tert.-Amins (bezogen auf das Terephthalsäurederivat der Formel (IX)) umgesetzt werden oder

b) acylierte Hydrochinone der Formel (VIIIb)

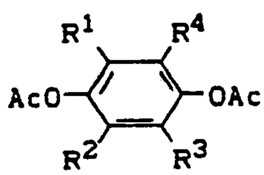

(VIIIb),

in welcher

die Reste $R^1$ bis $R^4$ die bei Formel (I) angegebene Bedeutung haben und

Ac für $C_1$—$C_{10}$—CO steht mit Terephthalsäure der Formel (IXa)

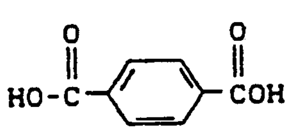

(IXa),

gegebenenfalls in üblichen organischen Lösungsmitteln bei Temperaturen von 50 bis 350°C oder in der

Schmelze in Abwesenheit von Lösungsmitteln bei Temperaturen von 50 bis 400°C miteinander umgesetzt werden oder

c) Hydrochinone der Formel (VIII) mit Estern, vorzugsweise Arylestern der Terephthalsäure der Formel (IXb)

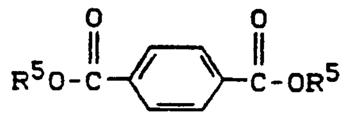

(IXb),

in welcher

$R^5$ für $C_1$—$C_4$-Alkyl, $C_6$—$C_{24}$-Aryl, $C_7$—$C_{30}$-Aralkyl bzw. -Alkylaryl, vorzugsweise $C_6$—$C_{24}$-Aryl, steht, in Gegenwart üblicher Umesterungskatalysatoren in üblichen Lösungsmitteln, gegebenenfalls bei einem Unterdruck von 0,1 bis $10^{-4}$ bar, umgesetzt werden.

Als übliche organische Lösungsmittel für Methoden a, b und c kommen in Betracht z.B. chlorierte Kohlenwasserstoffe wie Tetrachlorkohlenstoff, Perchlorethylen, Chloroform, Dichlormethan, aromatische Lösungsmittel wie Toluol, Diphenylether, Chlornaphthalin, Diphenylsulfon, Ketone wie Aceton, Butanon usw.

Bei Methode a) sollen tertiäre Amine in mindestens äquivalenten Mengen bezogen auf das Terephthalhalogenid, zugegen sein, z.B. Pyridin, Triethylamin usw.. Gegebenenfalls kann das tertiäre Amin als Lösungsmittel eingesetzt werden.

Die Lösung des Terephthalogenids z.B. in Toluol wird in der Lösung des substituierten Hydrochinons in z.B. Toluol/Pyridin zugetropft und die Lösung anschließend auf Temperaturen von z.B. 100°C für eine Stunde erhitzt. Das Polymere wird abfiltriert und durch Waschen mit Wasser und Alkohol (z.B. Methanol) von organischen Lösungsmitteln und von Salzen befreit.

Bei Methode Ic) soll ein üblicher Katalysator, der Umesterungsreaktionen beeinflussen kann, in Mengen von 0,001 bis 0,1 mol bezogen auf Terephthalsäureester der Formel (IXb) im Reaktionsgemisch anwesend sein. Es können übliche Umesterungskatalysatoren, z.B. Metallsalze und Verbindungen wie Manganacetat, Zinkchlorid, Titantetrapropylat, Zindibutyldilaurat oder Katalysatorkombinationen wie Zirkontetrapropylat/4-Dimethylaminopyridin oder Metalle wie Magnesium verwendet werden. Die Reaktion wird in hochsiedenden Lösungsmitteln, wie Naphthalinmethylether, vorzugsweise aber ohne Lösungsmittel durchgeführt. Die Reaktionskomponenten werden auf etwa 300°C, vorzugsweise bis dicht unter den Schmelzpunkt des sich bildenden Polymeren, für 1 bis 5 Stunden erhitzt und bei vermindertem Druck bei 280 bis 350°C nachkondensiert.

Pro Mol Hydrochinon der Formel (VIII) wird etwa 1 Mol Terephthalsäure der Formel (IX) eingesetzt.

Die Polymerisationsreaktionen a, b und c können auf übliche Art durchgeführt werden.

Die erfindungsgemäßen Polymeren können zu den flüssigkristallinen Polymeren gerechnet werden. Sie sind jedoch nicht wie bekannte flüssig-kristalline Polymere hochkristallin, schwerlöslich und schlecht mit anderen Polymeren verträglich.

Die erfindungsgemäßen Polymeren können vielmehr in Mengen von 0,5 bis 20 Gew.-% (bezogen auf das abzumischende andere Polymere) in anderen Polymeren (molekular dispers) gelöst sein.

Die erfindungsgemäßen Polymeren können in eine Vielzahl anderer Polymerer eingearbeitet werden, z.B. in Polycarbonate, Polyepoxide, ABS, Macrolon, Polyphenylensulfide, (z.B. RYTON®) Polyetheretherketone, Polyamide, Polyester, Polyethylen, PVC, Polyurethane, Acrylnitril-Butadien-Nitrilkautschuke (NBR), Kautschuke, in Copolymere z.B. Ethylenvinylacetat usw.

Zur Einarbeitung der erfindungsgemäßen Polymeren können diese mit den abzumischenden Polymeren, z.B. nach vermahlen auf höhere Temperaturen bis ca. 400°C erhitzt werden. Beim Abkühlen auf Raumtemperatur wird dann eine homogene Mischung (Legierung) erhalten.

Die mit den erfindungsgemäßen Polymeren hergestellten Polymermischungen haben ausgezeichnete Wärmeformbeständigkeit über einen weiten Temperaturbereich von −100 bis ca. 200°C, gute Kerbschlagzähigkeiten, Elastizitätsmodule, hohe Kratzfestigkeit und ausgezeichnete Scherfestigkeit.

Weiterhin können die erfindungsgemäßen Polyester der Formel (I), z.B. in einen Monomeren wie Styrol, Methylstyrol, Methylmethacrylat, Epoxide, Diisocyanate/Diolsysteme oder Monomermischungen wie Styrol/Acrylnitril usw. gelöst werden, anschließend wird dieses dann polymerisiert. Die Polymerisation der Monomeren erfolgt unter üblichen Bedingungen. So werden Vinylmonomere durch Zusatz von radiakalischen Initiatoren, Epoxide durch Zusatz von Polyaminen und Diisocyanat/Diolsysteme durch Zusatz von Zinnkatalysatoren polymerisiert. Es entsteht eine gute Polymer/Polymer-Mischung. Weiterhin können die Mischungen auch über ein gemeinsames Lösungsmittel erfolgen.

Aufgrund ihres Eigenschaftsprofils können derartige Mischungen einer Vielzahl von möglichen Verwendungen zugeführt werden. z.B. zur Herstellung von Werkstoffen, Spritzgußtypen, Folien, Filmen, Fasern und Fäden usw.

## Beispiel

1 g (2-Phenyl)ethylen-hydrochinon wird in einer Mischung aus 1,25 ml Pyridin und 15 ml Methylenchlorid vorgelegt und 0,95 g Terephthalsäuredichlorid, in 15 ml Methylenchlorid gelöst, zugegeben. Der Ansatz wird 24 Stunden bei 25°C gerührt, 60 ml Aceton zugegeben und weitere 12 Stunden

gerührt. Das Polymere wird mit Wasser und Aceton behandelt und die niedermolekularen Anteile und restliches HCl im Soxhlet mit Methanol extrahiert. Es werden 1,21 g Polymeres erhalten, das nach dem Trocknen zur Erhöhung des Molekulargewichtes bei $10^{-3}$ bar 5 Stunden bei 200°C getempert wird.

Beim 1. Aufheizvorgang in der DSC (Differential Scanning calorimetry) zeigt das Polymere eine Glastemperatur von 240°C, einen Schmelzpunkt von 320°C und einem Klärpunkt von 470°C.

**Patentansprüche**

1. Polyester der Formel (I)

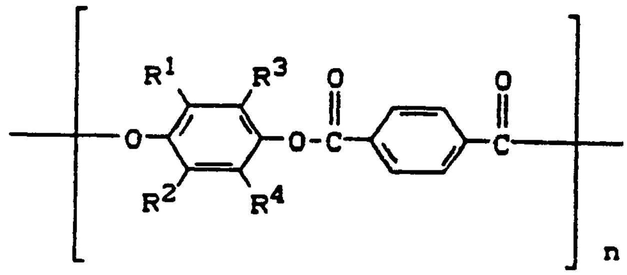

(I),

in welcher

die Reste $R^1$ bis $R^4$ unabhängig voneinander Wasserstoff, einen Arylalkyl-, Arylalkylether-, Arylalkylthioetherrest, mit einem unverzweigten, 2,3,4,5,6,7,8,9 oder 10 C-Atome enthaltenden Alkylteil, an dessen ω-C-Atom am Ende der Kette ein unsubstituierter 6 bis 24 C-Atome enthaltender Arylteil steht, bedeuten und

n für eine ganze Zahl von 5 bis 2000 steht,

mit der Maßgabe, daß immer einer der Reste $R^1$ bis $R^4$ verschieden von Wasserstoff sein muß.

2. Verfahren zur Herstellung der Polyester der Formel (I)

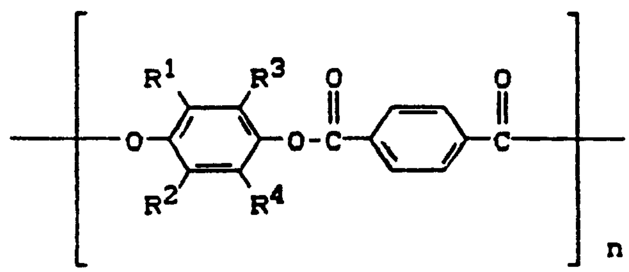

(I),

in welcher

die Reste $R^1$ bis $R^4$ unabhängig voneinander Wasserstoff, einen Arylalkyl-, Arylalkylether-, Alkylarylthioetherrest, mit einem unverzweigten, 2,3,4,5,6,7,8,9 oder 10 C-Atome enthaltenden Alkylteil, an dessen ω-C-Atom am Ende der Kette ein unsubstituierter 6 bis 24 C-Atome enthaltender Arylteil steht, bedeuten und

n für eine ganze Zahl von 5 bis 2000 steht,

mit der Maßgabe, daß immer einer der Reste $R^1$ bis $R^4$ verschieden von Wasserstoff sein muß, dadurch gekennzeichnet, daß.

Hydrochinone der Formel (VIII)

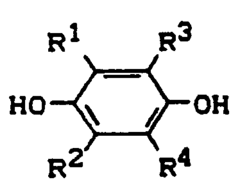

(VIII),

in welcher

die Reste $R^1$ bis $R^3$ die bei Formel (I) angegebene Bedeutung haben,

a) mit Terephthalsäurederivaten wie den Halogeniden der Formel (IX)

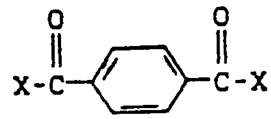

(IX),

in welcher

X für Halogen wie Cl, Br steht, gegebenenfalls in üblichen organischen Lösungsmitteln bei Temperaturen von 0 bis 250°C, in Gegenwart von äquivalenten Mengen eines tert.-Amins (bezogen auf das Terephthalsäurederivat der Formel (IX), umgesetzt werden oder

b) acylierte Hydrochinone der Formel (VIIIb)

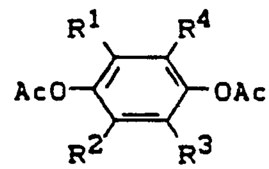

(VIIIb),

in welcher

die Reste $R^1$ bis $R^4$ die bei Formel (I) angegebene Bedeutung haben und

Ac für $C_1$—$C_{10}$—CO steht mit Terephthalsäure der Formel (IXa)

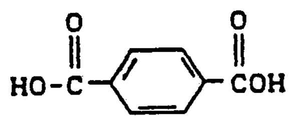

(IXa),

gegebenenfalls in üblichen organischen Lösungsmitteln bei Temperaturen von 50 bis 200°C oder in der Schmelze in Abwesenheit von Lösungsmitteln bei Temperaturen von 150 bis 250°C miteinander umgesetzt werden oder

c) Hydrochinone der Formel (VIII) mit Estern, vorzugsweise Arylestern der Terephthalsäure der Formel (IXb)

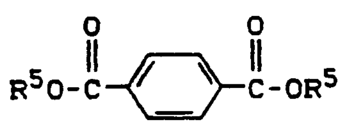

(IXb),

in welcher

$R^5$ für $C_1$ bis $C_4$-Alkyl, $C_6$—$C_{24}$-Aryl, $C_7$—$C_{30}$-Aralkyl, -Alkylaryl, steht, in Gegenwart üblicher Umsterungskatalysatoren in üblichen Lösungsmitteln, gegebenenfalls bei einem Unterdruck von 0,1 bis $10^{-4}$ bar, umgesetzt werden.

3. Verwendung von Polyestern des Anspruchs 1 zur Abmischung mit anderen Polymeren, gegebenenfalls als Zusatz zur polymerisierenden Monomerlösung bei der Herstellung des Polymeren.

4. Mischungen aus Polyestern des Anspruchs 1 mit anderen Polymeren.

5. Verfahren zur Herstellung von Mischungen nach Anspruch 4, dadurch gekennzeichnet, daß die Polyester nach Anspruch 1 im Monomeren gelöst werden, welches dann polymerisiert wird.

**Revendications**

1. Polyesters de formule (I)

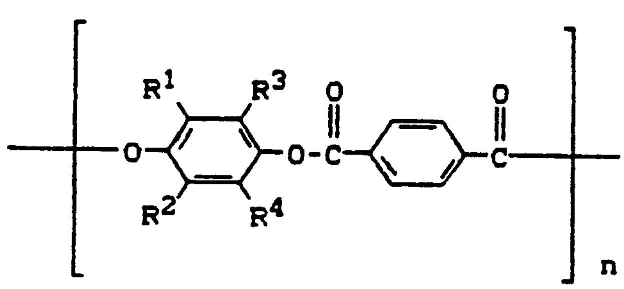

(I),

dans laquelle

les restes $R^1$ à $R^4$ représentent, indépendamment les uns des autres, l'hydrogène, un reste arylalkyle, arylalkyléther, arylalkyl-thioéther, avec une partie alkyle non ramifiée contenant 2,3,4,5,6,7,8,9, ou 10 atomes de carbone, dont l'atome ω de carbone à l'extrémité de la chaîne porte une partie aryle non substituée contenant 6 à 24 atomes de carbone et

n est un nombre entier de 5 à 2000, sous réserve que l'un des restes $R^1$ à $R^4$ doive toujours être différent de l'hydrogène.

2. Procédé de production des polyesters de formule (I)

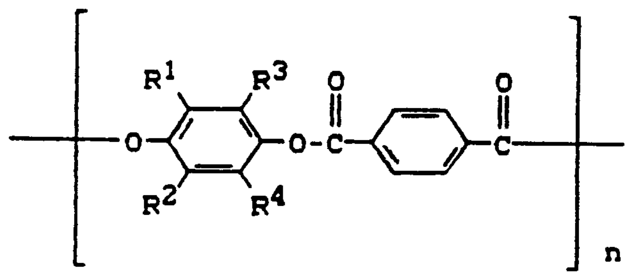

(I),

dans laquelle

les restes $R^1$ à $R^4$ représentent, indépendamment les uns des autres, l'hydrogène, un reste arylalkyle, arylalkyléther, arylalkyl-thioéther, avec une partie alkyle non ramifiée contenant 2,3,4,5,6,7,8,9 ou 10 atomes de carbone, dont l'atome ω de carbone à l'extrémité de la chaîne porte une partie aryle non substituée contenant 6 à 24 atomes de carbone et

n est un nombre entier de 5 à 2000 sous réserve que l'un des restes $R^1$ à $R^4$ doive toujours être différent de l'hydrogène, caractérisé en ce que des hydroquinones de formule (VIII)

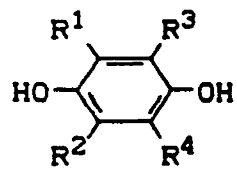

(VIII),

dans laquelle

les restes $R^1$ à $R^3$ ont la définition indiquée pour la formule (I)

a) sont amenées à réagir avec des dérivés d'acide téréphtalique tels que les halogénures de formule (IX)

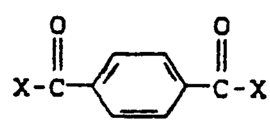

(IX),

dans laquelle

X est un halogène tel que Cl, Br, le cas échéant dans des solvants organiques classiques à des températures de 0 à 250°C, en présence de quantités équivalentes d'une amine tertiaire (par rapport au dérivé d'acide téréphtalique de formule (IX)) ou bien

b) des hydroquinones acylées de formule (VIIIb)

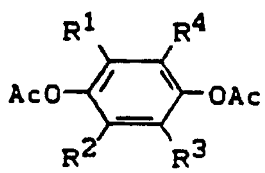

(VIIIb),

dans laquelle

les restes $R^1$ à $R^4$ ont la définition indiquée pour la formule (I) et

Ac est un reste $C_1$—$C_{10}$—CO sont amenées à réagir avec l'acide téréphtalique de formule (IXa)

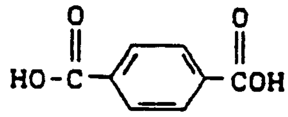

(IXa),

éventuellement dans des solvants organiques classiques à des températures de 50 à 200°C ou à l'état fondu en l'absence de solvants, à des températures de 150 à 250°C, ou

c) des hydroquinones de formule (VIII) sont amenées a réagir avec des esters, de préférence des esters aryliques d'acide téréphtalique de formule (IXb)

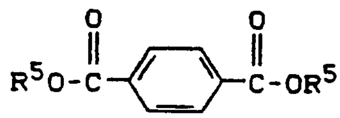

(IXb),

dans laquelle

$R^5$ est un groupe alkyle en $C_1$ à $C_4$, aryle en $C_6$ à $C_{24}$, aralkyle en $C_7$ à $C_{30}$, alkylaryle en $C_7$ à $C_{30}$, en présence de catalyseurs classiques de transestérification dans des solvants classiques, éventuellement sous une pression réduite, de 0,1 à $10^{-4}$ bar.

3. Utilisation de polyesters suivant la revendication 1 en mélange avec d'autres polymères, le cas échéant comme additif pour une solution de monomère à polymériser dans la production du polymère.

4. Mélanges de polyesters suivant la revendication 1 avec d'autres polymères.

5. Procédé de préparation de mélanges suivant la revendication 4, caractérisé en ce que les polyesters suivant la revendication 1 sont dissous dans le monomère lequel est ensuite polymérisé.

**Claims**

1. Polyesters corresponding to formula (I)

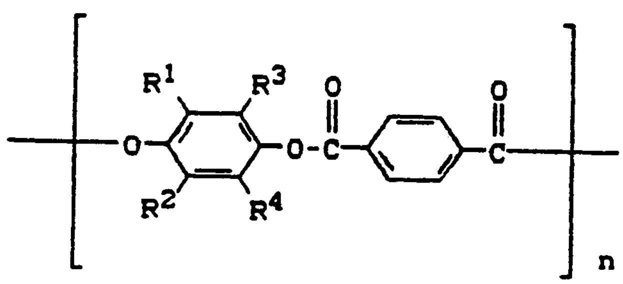

(I),

in which

the substituents $R^1$ to $R^4$ independently of one another represent hydrogen, an arylalkyl, arylalkylether, alkylarylthioether group containing an unbranched alkyl moiety with 2,3,4,5,6,7,8,9 or 10 C atoms of which the chain is terminated at the ω-C atom by an unsubstituted aryl moiety containing 6 to 24 C atoms and

n is an integer of 5 to 2000, with the proviso that one of the substituents $R^1$ to $R^4$ must always be different from hydrogen.

2. A process for the production of the polyesters corresponding to formula (I)

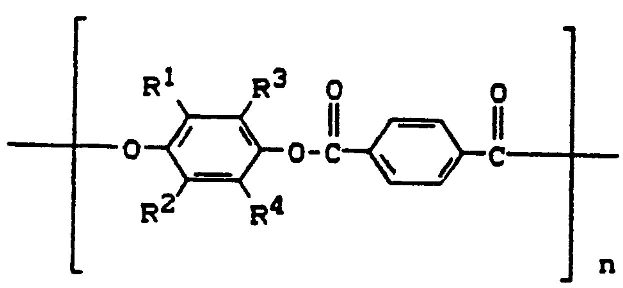

(I),

in which

the substituents $R^1$ to $R^4$ independently of one another represent hydrogen, an arylalkyl, arylalkylether,

arylalkylthioether group containing an unbranched alkyl moiety with 2,3,4,5,6,7,8,9 or 10 C atoms of which the chain is terminated at the ω-C atom by an unsubstituted aryl moiety containing 6 to 24 C atoms and

n is an integer of 5 to 2000, with the proviso that one of the substituents $R^1$ to $R^4$ must always be different from hydrogen, characterized in that hydroquinones corresponding to formula (VIII)

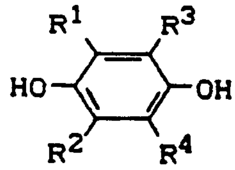

(VIII),

in which

$R^1$ to $R^3$ are as defined for formula (I), are reacted

a) with terephthalic acid derivatives, such as the halides corresponding to formula (IX)

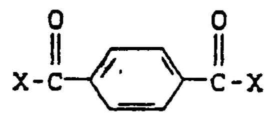

(IX),

in which

X is halogen, such as Cl, Br, optionally in typical organic solvents, at temperatures of 0 to 250°C in the presence of equivalent quantities of a tertiary amine (based on the terephthalic acid derivative of formula (IX) or

b) acylated hydroquinones corresponding to formula (VIIIb)

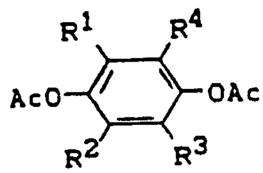

(VIIIb),

in which

$R^1$ to $R^4$ are as defined for formula (I) and

Ac is $C_{1-10}$ CO, are reacted with terephthalic acid corresponding to formula (IXa)

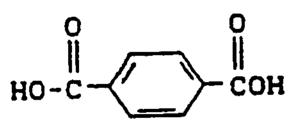

(IXa),

optionally in typical organic solvents, at temperatures of 50 to 200°C or in the melt in the absence of solvents at temperatures of 150 to 250°C or

c) hydroquinones corresponding to formula (VIII) are reacted with esters, preferably aryl esters, of terephthalic acid corresponding to formula (IXb)

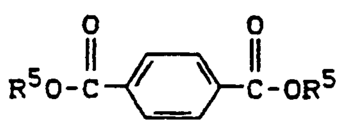

(IXb),

in which

$R^5$ is $C_{1-4}$ alkyl, $C_{6-24}$ aryl, $C_{7-30}$ aralkyl, -alkylaryl, in the presence of typical transesterification catalysts in typical solvents, optionally under a reduced pressure of 0.1 to $10^{-4}$ bar.

3. The use of the polyesters claimed in claim 1 for blending with other polymers, optionally as an additive to the polymerizing monomer solution in the production of the polymer.

4. Blends of the polyesters claimed in claim 1 with other polymers.

5. A process for the production of the blends claimed in claim 4, characterized in that the polyesters claimed in claim 1 are dissolved in the monomer which is then polymerized.